# EUROPEAN PATENT SPECIFICATION

(11) **EP 4 283 176 B1**
(45) Date of publication and mention of the grant of the patent: **26.03.2025**
(21) Application number: 22175163.9
(22) Date of filing: 24.05.2022
(51) Int. Cl.: F16L 53/37, H01M 8/04007, F17C 7/04, F16L 53/38, B64D 37/30, B60L 50/71, B60L 50/72, B64D 1/00, F17C 9/02, H01M 8/04082, B64D 41/00

(54) **PIPE FOR HEATING A CRYOGENIC LIQUEFIED GAS AND METHOD FOR PRODUCING THE SAME**
ROHR ZUM ERHITZEN EINES KRYOGENEN FLÜSSIGGASES UND VERFAHREN ZUM PRODUZIEREN DESSELBEN
TUYAU DE CHAUFFAGE D'UN GAZ LIQUÉFIÉ CRYOGÉNIQUE ET SON PROCÉDÉ DE FABRICATION

(43) Date of publication of application: 29.11.2023
(73) Proprietor: Airbus Operations GmbH, 21129 Hamburg (DE)
(72) Inventor: Linde, Peter, 21129 Hamburg (DE); Hegenbart, Matthias, 21129 Hamburg (DE)

(56) References cited:
- EP-A1- 3 845 747
- EP-A2- 2 938 711
- GB-A- 2 587 556
- US-A1- 2019 331 429
- US-A1- 2020 251 757

## Description

The invention relates to a pipe for heating a cryogenic liquefied gas, a pipe system, a fuel propulsion system, and a method for producing a pipe for heating a cryogenic liquefied gas.

In aeronautical fuel cell propulsion systems, hydrogen most commonly is stored in a liquid hydrogen tank, cooled to -253°C (cryogenic liquefied hydrogen). In this storage form, the hydrogen occupies less volume than in gas form, and volume is scarce in aircrafts. In order to function in a fuel cell, the hydrogen needs to be heated up to approximately room temperature (RT). This heating needs to be carried out between the liquid hydrogen (LH2) and the fuel cell.

US 2019/0331429 A1 presents a pipe heating system for an aircraft.

The object of the invention is to provide a device for converting cryogenic liquefied gas into gas that can be provided for a fuel cell propulsion system.

To achieve this object, the invention provides a pipe according to claim 1. A pipe system, a fuel cell propulsion system, and a method for producing a pipe are subject-matter of the parallel claims.

Advantageous embodiments of the invention are subject-matter of the dependent claims.

In one aspect, the invention provides a pipe for heating a cryogenic liquefied gas, the pipe having a peripheral wall including a ply of one or more electrically conductive carbon fibers, the ply being configured and electrically connectable to a power supply in such a way that the one or more carbon fibers are heated when power is supplied to the ply.

Preferably, the one or more carbon fibers are coated with an electrically non-conductive material.

Preferably, the one or more carbon fibers are coated with a polymer resin.

Preferably, the one or more carbon fibers are coated with an epoxy resin.

Preferably, the peripheral wall further comprises a graphene layer.

Preferably, the graphene layer is arranged between an inner pipe region of the pipe and the ply.

Preferably, the one or more carbon fibers are arranged disconnected between end portions of the one or more carbon fibers.

Preferably, the end portions are electrically connectable to the power supply.

Preferably, the end portions extend out of the ply.

Preferably, the end portions of a plurality of carbon fibers are electrically connected into a bundle.

Preferably, the one or more carbon fibers are at least partially embedded in a matrix.

Preferably, the one or more carbon fibers that are embedded in the matrix, build a carbon fiber-reinforced polymer.

Preferably, the one or more carbon fibers are arranged in a substantially longitudinal direction of the pipe.

Preferably, the ply includes a plurality of carbon fibers arranged substantially in parallel to each other.

Preferably, the ply extends radially over the peripheral wall.

Preferably, the one or more carbon fibers are arranged at and/or around a circumference of the pipe.

Preferably, the ply is a part of a laminate that includes at least a further ply.

Preferably, the further ply includes one or more carbon fibers.

Preferably, the pipe is configured for converting cryogenic liquefied gas into gas.

Preferably, the pipe is configured for conducting gas and cryogenic liquefied gas.

Preferably, the cryogenic liquefied gas is cryogenic liquefied hydrogen.

Preferably, the gas is hydrogen.

In another aspect, the invention provides a pipe system including the pipe and a power supply electrically connected to the ply.

Preferably, the pipe system includes an electrical element for regulating an electric current through the ply.

Preferably, the pipe system includes a temperature measuring means for measuring a temperature of the pipe.

In another aspect, the invention provides a fuel cell propulsion system, including the pipe system, the pipe being in fluid connection with a tank and a fuel cell device.

Preferably, the fuel propulsion system further includes a heat exchanger for transferring heat that is produced by the fuel cell device to the pipe system.

In another aspect, the invention provides an aircraft including the pipe, the pipe system and/or the fuel propulsion system according to any of the preceding embodiments.

In another aspect, the invention provides a method for producing a pipe for heating a cryogenic liquefied gas, the method comprising the steps:
Producing a ply including one or more electrically conductive carbon fibers, the ply being configured and electrically connectable to a power supply in such a way that the one or more carbon fibers are heated when power is supplied to the ply; and
Folding the ply to a pipe.

Preferably, the method further comprises the step:
Coating the carbon fibers with an electrically non-conductive material.

Preferably, the method further comprises the step:
Coating the carbon fibers with a polymer resin.

Preferably, the method further comprises the step:
Coating the carbon fibers with an epoxy resin.

Preferably, the method further comprises the step:
At least partially embedding the carbon fibers in a matrix.

Preferably, the method further comprises the step:
Building a carbon fiber-reinforced polymer.

Preferably, the method further comprises the step:
Arranging the one or more carbon fibers disconnected between end portions of the one or more carbon fibers.

Preferably, the method further comprises the step:
Arranging a plurality of carbon fibers substantially in parallel to each other.

Preferably, the method further comprises the step:
Folding the ply such that the one or more carbon fibers are arranged in a substantially longitudinal direction of the pipe.

Preferably, the method further comprises the step:
Arranging the one or more carbon fibers at and/or around a circumference of the pipe.

Preferably, the method further comprises the step:
Adding a graphene layer on the ply.

Preferably, the graphene layer is added by spraying graphene flakes and/or by applying a buckypaper on the ply.

Preferably, the method further comprises the step:
Electrically connecting end portions of a plurality of carbon fibers into a bundle.

Preferably, the method further comprises the step:
Electrically connecting the ply, a bundle and/or end portions of the one or more carbon fibers to a power supply.

Preferably, the method further comprises the step:
Adding further plies in order to build a laminate.

Preferably, the further plies are added by filament winding.

Embodiments of the invention preferably have the following advantages and effects:
Embodiments of the invention preferably provide a method and a device for heating liquid hydrogen in carbon fiber-reinforced polymer (CFRP) pipes to a temperature, reaching gas form, and to room temperature (RT), for use in a fuel cell, without any external heating source outside the pipe.

Preferred embodiments of the invention are advantageous, in particular, when main engines are electric and are obtaining their energy from a fuel cell that has not yet reached its operating temperature, such as at cold start of the fuel cell.

The heating of the liquid hydrogen can be achieved by one or more coated carbon fibers in the inside of a ply of the pipe, in which electric current can be running.

The heat can be transferred to the hydrogen via a graphene cover layer, that can transmit heat via surfaces the best.

Operational functions may be:
- heating of liquid hydrogen in a pipe from an LH2 tank to a fuel cell at cold start;
- contributing to heating in a pipe from an LH2 tank to a fuel cell; and/or
- reducing size and weight of a heat exchanger.

It is preferred that the pipe is sufficiently tight to suppress permeation.

In preferred embodiments, the innermost layer of graphene can have multiple functions, such as:
- transfer the heat to the hydrogen from the heated coated carbon fibers;
- contribute to suppression of hydrogen permeation; and/or
- contribute to suppress static electricity at fast filling through the pipe.

Embodiments of the invention preferably have the following advantages:
- enabling heating of hydrogen in CFRP plies when no further heat source is available (e.g., at cold start of a fuel cell);
- heat can be transferred directly to hydrogen via highly thermally conducting graphene layer;
- the heat source may come from the inside of a CFRP laminate, from coated carbon fibers, which may be space and weight saving;
- the device may assist heat exchanger at operating temperature which can reduce weight and size;
- a graphene layer preferably conducts heat and contributes to suppress permeation; and/or
- a graphene layer may also contribute to avoid static electricity at fast filling.

Embodiments of the invention are now explained in more detail with reference to the accompanying drawings of which
- Fig. 1: shows a comparative embodiment of a fuel cell propulsion system in which heat is applied to a pipe via a heat exchanger;
- Fig. 2: shows a comparative embodiment of a pipe system in which heat is applied to a pipe via heating spiral;
- Fig. 3: shows a fuel cell propulsion system including a pipe according to an embodiment of the invention;
- Fig. 4: shows a sectional view of the pipe of according to an embodiment of the invention;
- Fig. 5: shows an enlarged view of a peripheral wall of the pipe according to an embodiment of the invention;
- Fig. 6: shows an embodiment of a carbon fiber; and
- Fig. 7: shows a pipe system according to an embodiment of the invention.

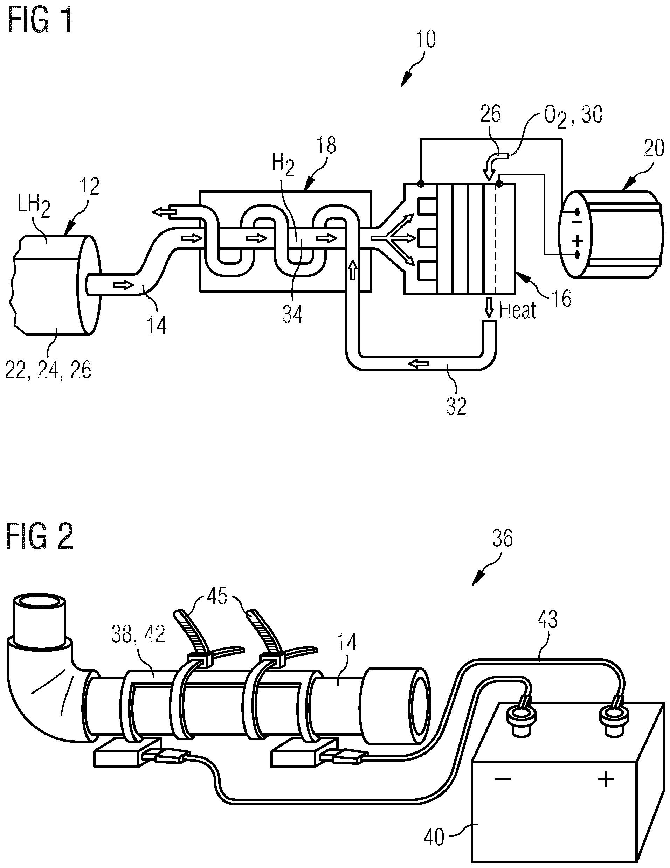

Fig. 1 shows a comparative embodiment of a fuel cell propulsion system 10.

The fuel cell propulsion system 10 includes a tank 12, a pipe 14, a fuel cell device 16, a heat exchanger 18, and an electric motor 20.

The tank contains a fuel 22 in form of a cryogenic liquefied gas 24.

The cryogenic liquefied gas 24 is preferably liquid hydrogen 26, but other cryogenic liquefied gases 24 which can be used as fuel 22 in the fuel cell device 16 are within the scope of the invention.

The pipe 14 is in fluid connection with the tank 12 and the fuel cell device 16.

In operation, the fuel cell device 16 converts the chemical energy of the fuel 22 and an oxidizing agent 26 into electricity. Heat is produced by the fuel cell device 16.

The oxidizing agent 26 in the case shown in Fig. 1 is oxygen 30 in gas form. The electricity is provided for the electric motor 20.

For operation, the fuel 22 that is provided for the fuel cell device 16, needs to be in gas form.

In the comparative embodiment of Fig. 1, a heat exchanger 18 transfers the heat produced by the fuel cell device 16 via a hot liquid pipe 32 to the pipe 14, so that in the pipe 14 the liquid hydrogen 26 is converted into hydrogen 34 in gas form.

Provided the liquid hydrogen 26 can obtain the energy from a heat source, this works well. However, if the fuel cell device 16 is cold, at start, no heat is produced by the fuel cell device 16 for several minutes. However, to function, the fuel cell device 16 needs hydrogen 34 warmed up to room temperature (RT).

Fig. 2 shows a comparative embodiment of a pipe system 36.

The pipe system 36 includes the pipe 14, a heating spiral 38, and a power supply 40.

The heating spiral 38 includes an electrically conductive wire 42, for instance a copper wire, that is clamped on top of the pipe 14 by clamps 45.

The heating spiral 38 is electrically connected to the power supply 40 via an electric cable 43.

When power is supplied to the heating spiral 38, the wire 42 is heated. The heat is transferred to the pipe 14, which, in turn, warms up the liquid hydrogen 26 in the pipe 14.

The heating spiral 38 includes a straight piece of the electrically conductive wire 42. Thus, the pipe 14 is heated mainly at one side thereof. The overall efficiency of this pipe system 36 is reduced.

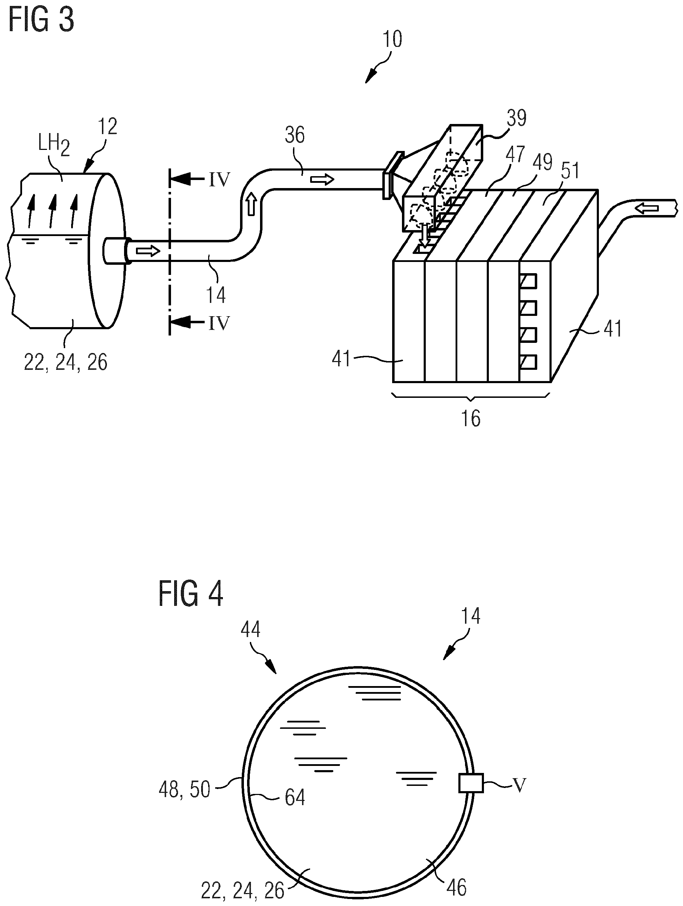

Fig. 3 shows a fuel cell propulsion system 10 according to an embodiment of the invention.

In the embodiment shown in Fig. 3, the fuel cell propulsion system 10 includes the tank 12, a pipe system 36, and the fuel cell device 16.

The fuel cell propulsion system 10 can additionally include a heat exchanger 18.

The fuel cell device 16 includes a block 39 for distributing hydrogen 34, a polar/bipolar plate 41, an anode 47, a membrane 49, a cathode 51, and another polar/bipolar plate 41.

The pipe system 36 includes a pipe 14 and a power supply 40 (not shown).

Fig. 4 shows a sectional view of the pipe 14 according to an embodiment of the invention. The cross-section is taken from line IV-IV in Fig. 3.

The pipe 14 includes a peripheral wall 44 surrounding an inner pipe region 46.

The peripheral wall 44 includes a laminate 48. In the present case, the laminate 48 is designed as a carbon fiber-reinforced polymer 50.

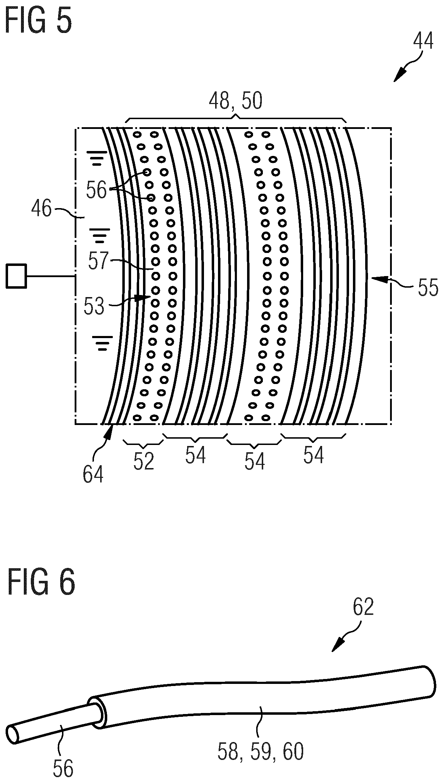

Fig. 5 shows an enlarged view of the peripheral wall 44 of the pipe 14. The enlarged view is taken from the box of Fig. 4.

The laminate 48 includes a (CFRP) ply 52 that is preferably arranged at an innermost region 53 of the peripheral wall 44.

The laminate 48 may include further (CFRP) plies 54 arranged in an outside region 55 of the peripheral wall 44.

The (innermost) ply 52 of the laminate 48 includes a plurality of carbon fibers 56. However, within the scope of the invention, the ply 52 may also include only a single carbon fiber 56.

The carbon fibers 56 are embedded in a matrix 57.

Fig. 6 shows an embodiment of one of the plurality of carbon fibers 56 of Fig. 5.

The one or more carbon fibers 56 are coated with an electrically non-conductive material 59. In the present case, the one or more carbon fibers 56 are coated with a polymer resin 58, namely an epoxy resin 60.

The carbon fiber 56 is electrically conductive, while the epoxy resin 60 is non-conductive.

The coated carbon fiber 62 can withstand temperatures of over 700°C. The epoxy resin 60 allows transmission of ions, but not of electrons. Thus, the epoxy resin 60 avoids short-circuits or current leakage, when a plurality of coated carbon fibers 62 could come into contact.

The carbon fibers 56 that are embedded in the matrix 57, build the carbon fiber-reinforced polymer 50.

Reference is made again to Fig. 5.

The peripheral wall 44 further comprises a graphene layer 64 that is arranged between the inner pipe region 46 and the ply 52.

The graphene layer 64 can have multiple effects. It can conduct heat, it can contribute to suppress permeation, and/or it can contribute to avoid static electricity when the pipe 14 is filled fast with liquid hydrogen 26.

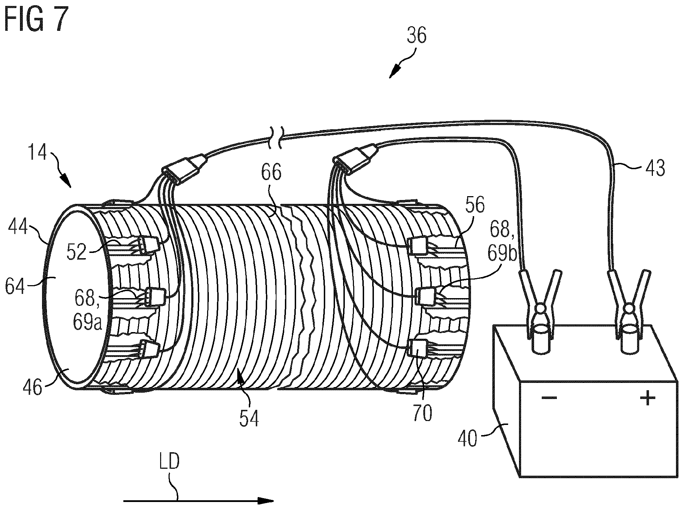

Fig. 7 shows a pipe system 36 according to an embodiment of the invention.

In contrast to the heating spiral 38 in Fig. 2, the ply 52 radially extends over the peripheral wall 44 of the pipe 14.

The ply 52 may also be radially extending over the entire peripheral wall 44.

In other words, the ply 52 may surround the inner pipe region 46 of the pipe 14.

The carbon fibers 56 of the ply 52 are thus arranged at and/or around a circumference 66 of the pipe 14.

In the embodiment shown in Fig. 7, the carbon fibers 56 are arranged in a longitudinal direction (LD) of the pipe 14. However, the carbon fibers 56 may also be arranged in any other direction, for example in a transversal direction of the pipe 14.

The carbon fibers 56 respectively include end portions 68.

The end portions 68 are located at opposite sides 69a, 69b of the carbon fibers 56.

The carbon fibers 56 are arranged disconnected between the end portions 68. Thus, no short-circuit is produced.

The end portions 68 may extend out of the ply 52.

The end portions 68 of some of the plurality of carbon fibers 56 are electrically connected into a bundle 70.

The bundles 70 are electrically connected to the power supply 40 such that the ply 52 is electrically connected to the power supply 40.

When power is supplied to the ply 52, the carbon fibers 56 are heated. Thus, the pipe 14 can heat the liquid hydrogen 26 to room temperature (RT). This may be advantageous especially at cold start of the fuel cell device 16.

When the fuel cell device 16 operates, a heat exchanger 18 may additionally transfer the heat that is produced by the fuel cell device 16 to the pipe 14. Due to the heated carbon fibers 56, the heat exchanger 18 may be reduced in size and weight.

In the following, a method for producing the pipe 14 according to an embodiment of the invention is described.

First, the plurality of carbon fibers 56 is provided and arranged disconnected between the end portions 68 and/or substantially in parallel to each other. This means, that the carbon fibers 56 are arranged in such a way that short-circuits are avoided in the ply 52.

The carbon fibers 56 are then coated with the polymer resin 58, for example with epoxy resin 60.

The carbon fibers 56 may be at least partially embedded in the matrix 57. The carbon fiber-reinforced polymer 50 is built and the ply 52 is produced.

The ply 52 is then covered with the graphene layer 64. This can be achieved by spraying graphene flakes on the ply 52, by applying a buckypaper on the ply 52 or by any other suitable method producing a graphene layer 64 on the ply 52.

The ply 52 is then folded up to the pipe 14.

Preferably, the ply 52 is folded such that the carbon fibers 56 are arranged in the longitudinal direction (LD) of the pipe 14. However, other folding directions are possible.

Further plies 54 may be added by filament winding in order to build the laminate 48.

The end portions 68 of some of the carbon fibers 56 may then be electrically connected into a bundle 70.

The ply 52 is then electrically connected to the power supply 40 via the electric cable 43.

To regulate the heating, a temperature measuring means 72 may be placed on the pipe 14. The electric current through the carbon fibers 56 may be regulated by means of electrical elements 74, e.g., a resistor, inserted into the circuit.

Automated electric current regulation can be achieved by connecting the temperature measuring means 72 with a micro controller.

According to the invention, it is possible to arrange the carbon fibers 56 at and/or around the circumference 66 of the pipe 14. Thus, efficient heating of the liquid hydrogen 26 may be achieved.

### List of reference signs:

- 10: fuel cell propulsion system
- 12: tank
- 14: pipe
- 16: fuel cell device
- 18: heat exchanger
- 20: electric motor
- 22: fuel
- 24: cryogenic liquefied gas
- 26: liquid hydrogen
- 28: oxidizing agent
- 30: oxygen in gas form
- 32: hot liquid pipe
- 34: hydrogen in gas form
- 36: pipe system
- 38: heating spiral
- 39: block
- 40: power supply
- 41: plate
- 42: wire
- 43: electric cable
- 44: peripheral wall
- 45: clamp
- 46: inner pipe region
- 47: anode
- 48: laminate
- 49: membrane
- 50: carbon fiber-reinforced polymer (CFRP)
- 51: cathode
- 52: (innermost) ply
- 53: innermost region
- 54: (outer) plies
- 55: outside region
- 56: carbon fiber
- 57: matrix
- 58: polymer resin
- 59: electrically non-conductive material
- 60: epoxy resin
- 62: coated carbon fiber
- 64: graphene layer
- 66: circumference
- 68: end portion
- 69a, 69b: side
- 70: bundle
- 72: temperature measuring means
- 74: electrical elements

- CFRP: carbon fiber-reinforced polymer
- LD: longitudinal direction
- LH2: liquid hydrogen
- RT: room temperature

## Claims

1. A pipe (14) having a peripheral wall (44) including a ply (52) of one or more electrically conductive carbon fibers (56), the ply (52) being configured and electrically connectable to a power supply (40) in such a way that the one or more carbon fibers (56) are heated when power is supplied to the ply (52), **characterized in that** the pipe (14) is for heating a cryogenic liquefied gas (24).

2. The pipe (14) according to claim 1, whereas the one or more carbon fibers (56) are coated with an electrically non-conductive material (59), preferably a polymer resin (58), more preferably an epoxy resin (60).

3. The pipe (14) according to claim 1 or 2, whereas the peripheral wall (44) further comprises a graphene layer (64), which preferably is arranged between an inner pipe region (46) of the pipe (14) and the ply (52).

4. The pipe (14) according to any of the preceding claims, whereas the one or more carbon fibers (56) are arranged disconnected between end portions (68) of the one or more carbon fibers (56).

5. The pipe (14) according to claim 4, whereas the end portions (68) are electrically connectable to the power supply (40) and/or the end portions (68) of a plurality of carbon fibers (56) are electrically connected into a bundle (70).

6. The pipe (14) according to any of the preceding claims, whereas the one or more carbon fibers (56) are at least partially embedded in a matrix (57) for building a carbon fiber-reinforced polymer (50).

7. The pipe (14) according to any of the preceding claims, whereas the one or more carbon fibers (56) are arranged in a substantially longitudinal direction (LD) of the pipe (14) and/or the ply (52) includes a plurality of carbon fibers (56) arranged substantially in parallel to each other and/or the ply (52) extends radially over the peripheral wall (44).

8. The pipe (14) according to any of the preceding claims, whereas the ply (52) is a part of a laminate (48) that includes at least a further ply (54) of one or more carbon fibers (56).

9. The pipe (14) according to any of the preceding claims, whereas the pipe (14) is configured for converting cryogenic liquefied gas (24) into gas and/or for conducting gas and cryogenic liquefied gas (24); and whereas the cryogenic liquefied gas preferably is cryogenic liquefied hydrogen (26), while the gas is hydrogen (34).

10. A pipe system (36) including the pipe (14) according to any of the preceding claims, a power supply (40) electrically connected to the ply (52), and preferably an electrical element (74) for regulating an electric current through the ply (52) and/or a temperature measuring means (72) for measuring a temperature of the pipe (52).

11. A fuel cell propulsion system (10), including the pipe system (36) according to claim 10, the pipe (14) being in fluid connection with a tank (12) and a fuel cell device (16).

12. The fuel propulsion system according to claim 11, further including a heat exchanger (18) for transferring heat that is produced by the fuel cell device (16) to the pipe system (36).

13. A method for producing a pipe (14) for heating a cryogenic liquefied gas (24) according to any of the claims 1 to 9, the method comprising the steps:
13.1 Producing a ply (52) including one or more electrically conductive carbon fibers (56), the ply (52) being configured and electrically connectable to a power supply (40) in such a way that the one or more carbon fibers (56) are heated when power is supplied to the ply (52); and
13.2 Folding the ply (52) to a pipe (14).

14. The method according to claim 13, further comprising the steps:
14.1 Coating the carbon fibers (56) with an electrically non-conductive material (59), preferably a polymer resin (58), more preferably an epoxy resin (60); and/or
14.2 At least partially embedding the carbon fibers (56) in a matrix (57) for building a carbon fiber-reinforced polymer (50); and/or
14.3 Arranging the one or more carbon fibers (56) disconnected between end portions (68) of the one or more carbon fibers (56); and/or
14.4 Arranging a plurality of carbon fibers (56) substantially in parallel to each other; and/or
14.5 Folding the ply (52) such that the one or more carbon fibers (56) are arranged in a substantially longitudinal direction (LD) of the pipe (14); and/or
14.6 Arranging the one or more carbon fibers (56) at and/or around a circumference (66) of the pipe (14); and/or
14.7 Adding a graphene layer (64) on the ply (52), in particular by spraying graphene flakes or by applying a buckypaper on the ply (52).

15. The method according to claim 13 or 14, further comprising the steps:
15.1 Electrically connecting end portions (68) of a plurality of carbon fibers (56) into a bundle (70); and/or
15.2 Electrically connecting the ply (52), a bundle (70) and/or end portions (68) of the one or more carbon fibers (56) to a power supply (40); and/or
15.3 Adding further plies (54), in particular by filament winding, in order to build a laminate (48).

## Patentansprüche

1. Rohr (14) mit einer Umfangswand (44), die eine Lage (52) aus einer oder mehreren elektrisch leitenden Kohlenstofffasern (56) enthält, wobei die Lage (52) so konfiguriert und elektrisch mit einer Stromversorgung (40) verbindbar ist, dass die eine oder mehreren Kohlenstofffasern (56) erwärmt werden, wenn der Lage (52) Strom zugeführt wird,
**dadurch gekennzeichnet, dass** das Rohr (14) zum Erhitzen eines kryogenen verflüssigten Gases (24) dient.

2. Das Rohr (14) gemäß Anspruch 1, wobei die eine oder die mehreren Kohlenstofffasern (56) mit einem elektrisch nicht leitenden Material (59), vorzugsweise einem Polymerharz (58), besonders bevorzugt einem Epoxidharz (60), beschichtet sind.

3. Rohr (14) gemäß Anspruch 1 oder 2, wobei die Umfangswand (44) ferner eine Graphenschicht (64) aufweist, die vorzugsweise zwischen einem inneren Rohrbereich (46) des Rohres (14) und der Lage (52) angeordnet ist.

4. Rohr (14) gemäß einem der vorhergehenden Ansprüche, wobei die eine oder mehreren Kohlenstofffasern (56) zwischen Endabschnitten (68) der einen oder mehreren Kohlenstofffasern (56) getrennt angeordnet sind.

5. Rohr (14) gemäß Anspruch 4, wobei die Endabschnitte (68) elektrisch mit der Stromversorgung (40) verbindbar sind und/oder die Endabschnitte (68) einer Vielzahl von Kohlenstofffasern (56) elektrisch zu einem Bündel (70) verbunden sind.

6. Rohr (14) gemäß einem der vorhergehenden Ansprüche, wobei die eine oder mehreren Kohlenstofffasern (56) zumindest teilweise in eine Matrix (57) zum Aufbau eines kohlenstofffaserverstärkten Polymers (50) eingebettet sind.

7. Rohr (14) gemäß einem der vorhergehenden Ansprüche, wobei die eine oder die mehreren Kohlenstofffasern (56) im Wesentlichen in Längsrichtung (LD) des Rohrs (14) angeordnet sind und/oder die Lage (52) eine Vielzahl von Kohlenstofffasern (56) umfasst, die im Wesentlichen parallel zueinander angeordnet sind und/oder die Lage (52) sich radial über die Umfangswand (44) erstreckt.

8. Rohr (14) gemäß einem der vorhergehenden Ansprüche, wobei die Lage (52) ein Teil eines Laminats (48) ist, das mindestens eine weitere Lage (54) aus einer oder mehreren Kohlenstofffasern (56) enthält.

9. Rohr (14) gemäß einem der vorhergehenden Ansprüche, wobei das Rohr (14) zur Umwandlung von kryogenen Flüssiggas (24) in Gas und/oder zur Leitung von Gas und kryogenem Flüssiggas (24) ausgebildet ist; und wobei das kryogene Flüssiggas vorzugsweise kryogener Flüssigwasserstoff (26) ist, während das Gas Wasserstoff (34) ist.

10. Rohrsystem (36) mit dem Rohr (14) gemäß einem der vorangehenden Ansprüche, einer Stromversorgung (40), die elektrisch mit der Lage (52) verbunden ist, und vorzugsweise einem elektrischen Element (74) zur Regelung eines elektrischen Stroms durch die Lage (52) und/oder einem Temperaturmessmittel (72) zur Messung einer Temperatur des Rohrs (52).

11. Brennstoffzellenantriebssystem (10) mit dem Rohrsystem (36) gemäß Anspruch 10, wobei das Rohr (14) in Fluidverbindung mit einem Tank (12) und einer Brennstoffzellenvorrichtung (16) steht.

12. Brennstoffzellenantriebssystem gemäß Anspruch 11, ferner umfassend einen Wärmetauscher (18) zum Übertragen von Wärme, die von der Brennstoffzellenvorrichtung (16) erzeugt wird, an das Rohrsystem (36).

13. Verfahren zur Herstellung eines Rohrs (14) zum Erhitzen von kryogenem Flüssiggas (24) gemäß einem der Ansprüche 1 bis 9, wobei das Verfahren die Schritte umfasst:
13.1 Herstellen einer Lage (52) mit einer oder mehreren elektrisch leitfähigen Kohlenstofffasern (56), wobei die Lage (52) derart ausgestaltet und elektrisch mit einer Stromversorgung (40) verbindbar ist, dass die eine oder die mehreren Kohlenstofffasern (56) erwärmt werden, wenn der Lage (52) Strom zugeführt wird; und
13.2 Falten der Lage (52) zu einem Rohr (14).

14. Verfahren gemäß Anspruch 13, ferner umfassend die Schritte:
14.1 Beschichten der Kohlenstofffasern (56) mit einem elektrisch nicht leitenden Material (59), vorzugsweise einem Polymerharz (58), besonders bevorzugt einem Epoxidharz (60); und/oder
14.2 Zumindest teilweises Einbetten der Kohlenstofffasern (56) in eine Matrix (57) zum Aufbau eines kohlenstofffaserverstärkten Polymers (50); und/oder
14.3 Anordnen der einen oder mehreren Kohlenstofffasern (56) getrennt zwischen Endabschnitten (68) der einen oder mehreren Kohlenstofffasern (56); und/oder
14.4 Anordnen einer Vielzahl von Kohlenstofffasern (56) im Wesentlichen parallel zueinander; und/oder
14.5 Falten der Lage (52), so dass die eine oder die mehreren Kohlenstofffasern (56) im Wesentlichen in einer Längsrichtung (LD) des Rohrs (14) angeordnet sind; und/oder
14.6 Anordnen der einen oder mehreren Kohlenstofffasern (56) an und/oder um einen Umfang (66) des Rohrs (14); und/oder
14.7 Hinzufügen einer Graphenschicht (64) auf der Lage (52), insbesondere durch Aufsprühen von Graphenflocken oder durch Aufbringen eines Buckypapers auf die Lage (52).

15. Verfahren gemäß Anspruch 13 oder 14, ferner umfassend die Schritte:
15.1 Elektrisches Verbinden von Endabschnitten (68) einer Vielzahl von Kohlenstofffasern (56) zu einem Bündel (70); und/oder
15.2 Elektrisches Verbinden der Lage (52), eines Bündels (70) und/oder von Endabschnitten (68) der einen oder mehreren Kohlenstofffasern (56) mit einer Energieversorgung (40); und/oder
15.3 Hinzufügen weiterer Lagen (54), insbesondere durch Filamentwicklung, um ein Laminat (48) zu bilden.

## Revendications

1. Tuyau (14) ayant une paroi périphérique (44) comprenant un pli (52) d'une ou plusieurs fibres de carbone (56) conductrices d'électricité, le pli (52) étant configuré et connectable électriquement à une alimentation électrique (40) de telle sorte que la ou les fibres de carbone (56) sont chauffées lorsqu'une alimentation électrique est fournie au pli (52),
**caractérisé en ce que** le tuyau (14) est destiné à chauffer un gaz liquéfié cryogénique (24).

2. Tuyau (14) selon la revendication 1, alors que la ou les fibres de carbone (56) sont recouvertes d'un matériau électriquement non conducteur (59), de préférence une résine polymère (58), plus préférentiellement une résine époxy (60).

3. Tuyau (14) selon la revendication 1 ou 2, alors que la paroi périphérique (44) comprend en outre une couche de graphène (64), qui est de préférence disposée entre une zone interne (46) du tuyau (14) et le pli (52).

4. Le tuyau (14) selon l'une quelconque des revendications précédentes, dans lequel la ou les fibres de carbone (56) sont déconnectées entre les parties d'extrémité (68) de la ou des fibres de carbone (56).

5. Tuyau (14) selon la revendication 4, dans lequel les parties d'extrémité (68) sont électriquement connectables à l'alimentation électrique (40) et/ou les parties d'extrémité (68) d'une pluralité de fibres de carbone (56) sont électriquement connectées en un faisceau (70).

6. Tuyau (14) selon l'une quelconque des revendications précédentes, dans lequel une ou plusieurs fibres de carbone (56) sont au moins partiellement noyées dans une matrice (57) pour la construction d'un polymère (50) renforcé par des fibres de carbone.

7. Tuyau (14) selon l'une quelconque des revendications précédentes, dans lequel la ou les fibres de carbone (56) sont disposées dans une direction sensiblement longitudinale (LD) du tuyau (14) et/ou la nappe (52) comprend une pluralité de fibres de carbone (56) disposées sensiblement parallèlement les unes aux autres et/ou la nappe (52) s'étend radialement sur la paroi périphérique (44).

8. Tuyau (14) selon l'une quelconque des revendications précédentes, dans lequel le pli (52) fait partie d'un laminé (48) qui comprend au moins un autre pli (54) d'une ou de plusieurs fibres de carbone (56).

9. Le tuyau (14) selon l'une quelconque des revendications précédentes, dans lequel le tuyau (14) est configuré pour convertir le gaz liquéfié cryogénique (24) en gaz et/ou pour conduire le gaz et le gaz liquéfié cryogénique (24) ; et dans lequel le gaz liquéfié cryogénique est de préférence de l'hydrogène liquéfié cryogénique (26), tandis que le gaz est de l'hydrogène (34).

10. Système de tuyauterie (36) comprenant le tuyau (14) selon l'une quelconque des revendications précédentes, une alimentation électrique (40) connectée électriquement à la nappe (52), et de préférence un élément électrique (74) pour réguler un courant électrique à travers la nappe (52) et/ou un moyen de mesure de la température (72) pour mesurer une température du tuyau (52).

11. Système de propulsion à pile à combustible (10), comprenant le système de tuyaux (36) selon la revendication 10, le tuyau (14) étant en liaison fluidique avec un réservoir (12) et un dispositif à pile à combustible (16).

12. Système de propulsion selon la revendication 11, comprenant en outre un échangeur de chaleur (18) pour transférer la chaleur produite par le dispositif de pile à combustible (16) au système de tuyauterie (36).

13. Procédé de fabrication d'un tuyau (14) pour le chauffage d'un gaz liquéfié cryogénique (24) selon l'une quelconque des revendications 1 à 9, le procédé comprenant les étapes suivantes :
13.1 Produire un pli (52) comprenant une ou plusieurs fibres de carbone (56) conductrices d'électricité, le pli (52) étant configuré et connectable électriquement à une alimentation électrique (40) de telle sorte que la ou les fibres de carbone (56) sont chauffées lorsqu'une alimentation électrique est fournie au pli (52) ; et
13.2 Plier le pli (52) en un tuyau (14).

14. Procédé selon la revendication 13, comprenant en outre les étapes suivantes
14.1 Enduire les fibres de carbone (56) d'un matériau électriquement non conducteur (59), de préférence une résine polymère (58), plus préférentiellement une résine époxy (60) ; et/ou
14.2 Enrober au moins partiellement les fibres de carbone (56) dans une matrice (57) pour construire un polymère renforcé de fibres de carbone (50) ; et/ou
14.3 Disposer la ou les fibres de carbone (56) déconnectées entre les parties d'extrémité (68) de la ou des fibres de carbone (56) ; et/ou
14.4 Disposer une pluralité de fibres de carbone (56) sensiblement en parallèle les unes aux autres ; et/ou
14.5 Plier le pli (52) de manière à ce que la ou les fibres de carbone (56) soient disposées dans une direction sensiblement longitudinale (LD) du tuyau (14) ; et/ou
14.6 Disposer la ou les fibres de carbone (56) sur et/ou autour d'une circonférence (66) du tuyau (14) ; et/ou
14.7 Ajouter une couche de graphène (64) sur le pli (52), notamment par pulvérisation de paillettes de graphène ou par application d'un buckypaper sur le pli (52).

15. Procédé selon la revendication 13 ou 14, comprenant en outre les étapes suivantes
15.1 Connecter électriquement les extrémités (68) d'une pluralité de fibres de carbone (56) en un faisceau (70) ; et/ou
15.2 Connecter électriquement la nappe (52), un faisceau (70) et/ou des portions d'extrémité (68) d'une ou plusieurs fibres de carbone (56) à une alimentation électrique (40) ; et/ou
15.3 Ajouter d'autres plis (54), en particulier par enroulement filamentaire, afin de construire un laminé (48).
